# EUROPEAN PATENT SPECIFICATION

(11) **EP 1 238 398 B1**
(45) Date of publication and mention of the grant of the patent: **26.07.2006**
(21) Application number: 00982159.6
(22) Date of filing: 17.11.2000
(51) Int. Cl.: H01F 27/10, H01F 27/12

(54) **APPARATUS AND METHOD FOR COOLING POWER TRANSFORMERS**
VORRICHTUNG UND VERFAHREN ZUR KÜHLUNG VON LEISTUNGSTRANSFORMATOREN
APPAREIL ET PROCEDE DE REFROIDISSEMENT POUR TRANSFORMATEURS DE PUISSANCE

(30) Priority: 17.11.1999 US 166065 P
(43) Date of publication of application: 11.09.2002
(73) Proprietor: Trexco, LLC, Indianapolis, Indiana 46205 (US)
(72) Inventor: Longardner, Robert L., Indianapolis, IN 46226 (US); Visnesky, Anthony M. Jr., Springfield, IL 62702 (US)
(74) Representative: Naismith, Robert Stewart
(86) International application number: PCT/US2000/031810
(87) International publication number: WO 2001/037292

(56) References cited:
- EP-A- 0 043 511
- US-A- 3 579 162
- US-A- 4 936 109

## Description

### BACKGROUND OF THE INVENTION

The present invention pertains to transformers, and, in particular, to an apparatus and method for cooling power transformers during use.

Power transformers are employed within power supply systems in order to transform, transmit and distribute electricity for end-user consumption. Transformers are designated by high and low side operating voltages, and sized as to capacity of the volts and amperes being carried. For example, large-size transformers are utilized as transmission transformers, which step up the voltage along the power supply chain, as well as distribution transformers, which step down the voltages for distribution.

One shortcoming of existing transformers is their susceptibility to operational problems associated with high temperatures of operation, both internal and external to the transformers. Typically, in order to maintain rated capability and preserve useful life of the transformer and all of its constituent parts, maximum temperature within the transformer should be maintained below the lesser of 95°C (203°F) and a temperature that is 65°C above ambient temperature. The failure to keep the transformer temperature so regulated can result in failure of the transformer or perhaps the significant reduction of its useful life, each of which results in high cost to the industry due to the need to replace the destroyed transformer units.

Moreover, due to the directly proportional relationship between temperature and electrical resistance, when the temperature of the copper windings in the transformer core increases, the efficiency of the transformer decreases, thereby resulting in a loss of power output (watts) proportional to transformer core heating. Moreover, during use, the temperature inside the transformer tends to increase due to the electrical current flowing through the conducting windings and the micro-current flowing in the magnetic steel core.

Some prior attempts at controlling transformer temperature have been relatively crude. For instance, one common approach has been to simply drench the transformer with a water spray when ambient conditions suggest the risk of excessive transformer temperature, or when a high temperature condition is sensed.

In another approach, oil baths have been provided for the inner workings of the transformer. In different prior art applications, such oil baths were designed to operate on several levels. First, a "self cooled" level essentially relies on convention currents within the transformers insulating and cooling oil to draw heat away from the core. A second level uses a forced circulation of the insulating oil through heat exchangers/radiators integral with or separate from the transformer which utilize ambient air around the heat exchangers to absorb the heat energy of the cooling oil. A third level uses the forced oil circulation of the second level but adds electric fans, powered by energy supplied from the transformer itself or other sources of power in the substation, to force air circulation over the external radiators thus increasing heat removal from the oil and therefore the transformer windings, and thereby increasing transformer efficiency. These fans, which are selectively operated when transformer temperature rises are sufficiently large, are controlled by a controller connected to temperature sensors located in and on the transformers.

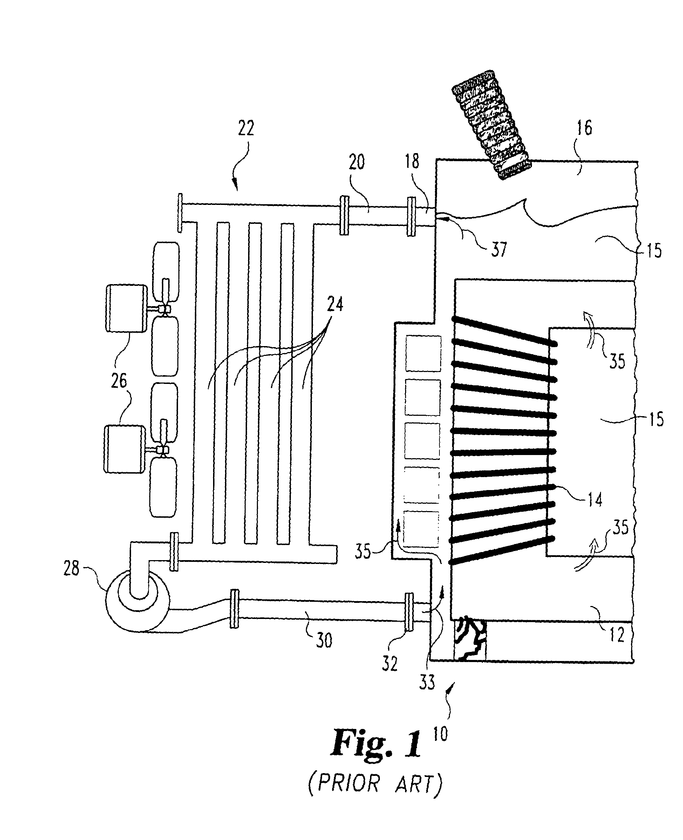

A prior art system that uses fans is diagrammatically shown in **FIG. 1.** The transformer, generally designated **10,** is of conventional design and includes a casing or housing in which is disposed a soft iron core **12** with copper windings **14** there-around. The core and windings are immersed in a bath of cooling oil **15.** A nitrogen gas blanket **16** at the top of the internal volume of the transformer housing maintains the quality of the oil within the housing.

Positioned proximate the top of the transformer housing is an outlet connected via a top isolating valve **18** to a conduit **20** that leads to a radiator or heat exchanger, generally designated **22.** In this prior system, radiator **22** includes finned cooling tubes **24** through which the cooling oil is circulated. The tubes are oriented in a series of spaced apart rows and columns to allow the passage of ambient air there-around for cooling purposes. A plurality of motor-driven fans **26** are designed to draw air over and around the finned cooling tubes **24** in order to provide forced-air ambient cooling. The outlet of radiator **22** is plumbed to a sealed, motor-driven pump **28** that pumps the cooling oil through conduit **30,** bottom isolating valve **32,** and back into the internal volume of the transformer housing.

During operation, pump **28** forces cooling oil into the base of the transformer as indicated by arrow **33.** As the oil travels upward, as indicated at 35, over and through the various openings provided within the internal workings of the transformer (such as the core **12** and windings **14),** the temperature of the cooling oil increases as it draws off heat, and thereby cools the transformer parts which have increased in temperature due to their operation. The now heated oil passes through the oil outlet at **37** into conduit **20** and is routed through radiator **22.** Ambient air, which is ducked into the area in which the radiator is installed, is drawn over the cooling tubes **24** by fans **26** to cool the oil passing through tubes **24.** The ambient air which has been heated as the energy is drawn off the cooling oil is discharged to the atmosphere, and the cooled fluid is returned to pump **28** for recirculation through the transformer.

While the prior art cooling system shown in **FIG. 1** does provide some benefit, its cooling limitations result in some transformers being operated in conditions which are undesirable. Specifically, limits imposed by ambient conditions, most specifically temperature humidity, can result in the cooling oil passing entirely through the heat exchanger without a sufficient removal of heat energy, such that over time the temperature of the cooling continues to build, and the cooling capabilities of such oil then declines. In the end, the cooling oil may become too hot to prevent the transformer from exceeding recommended temperatures.

Also, transformer utilization and consequently load current loading typically occurs during the highest ambient temperature conditions. For example, the temperature of the oil bath may be elevated on days when the ambient conditions are extremely warm and humid, and consequently the oil is not adequately cooled and the temperature continues to build in the transformer until damage can be done to the transformer workings.

Thus, it would be desirable to provide a cooling system for power transformers which overcomes these and other shortcomings of the prior art.

Aspects of the present invention are set forth in the independent claims. Preferred features of the present invention are set forth claims. Preferred features of the present invention are set forth in the dependent claims.

### SUMMARY OF THE INVENTION

The present invention provides an apparatus and method for improved cooling of the inner workings of a power transformer. The apparatus modulates transformer core heat while at the same time providing a high efficiency source of cooling which is less susceptible to having heat build up in the cooling oil due to ambient condition variation and core heat due to transformer loading. The apparatus selectively routes cooling oil for the transformer into a heat exchanger provided with a source of chillate more effective than ambient air. The present invention may utilize off-peak energy provided by the transformer to power the system via the use of heat exchangers that store energy for subsequent use. In one embodiment, the heat exchangers can utilize phase change material for heat storage.

One advantage of the present invention is that it provides a system for effectively cooling the inner workings of a transformer for all atmospheric conditions in order for the transformer to not be subjected to heat which damages its structural integrity and/or its efficiency.

Still another advantage of the present invention is that the cooling system can use a heat exchanger operated with chillate provided by the use of off-peak energy, thereby decreasing the cost of operations. Yet another advantage is that the heat energy of the transformer can be utilized in providing the energy required to operate the heat exchanger that cools the cooling oil routed in the transformer.

A further advantage is accomplished by features of the present invention that effect properly cooling of the transformer cooling oil for any ambient conditions, thereby maximizing the electrical capacity of the transformer.

One object of the inventive system is to improve the overall efficiency of the transformer by removing heat generated by current flow through the transformer. Another object is to increase the utilization and extend the useful life of the transformer serviced by the inventive cooling system.

The above mentioned and other advantages and objects of this invention, and the manner of attaining them, will become more apparent and the invention itself will be better understood by reference to the following description of embodiments of the invention taken in conjunction with the accompanying drawings.

### BRIEF DESCRIPTION OF THE DRAWINGS

**FIG. 1** is a diagrammatic front view, in partial cross-section, of a prior art cooling system for a power transformer.
**FIG. 2** is a diagrammatic front view, in partial cross-section, of portions of a cooling system for a power transformer of the present invention.
**FIG. 3** is a diagram of transformer useful hours as a function of transformer oil temperature, comparing the performance of prior art cooling systems with the performance of a cooling system constructed according to the teachings of the present invention. °C = 5/9 (°F -32)
**FIG. 4** is diagrammatic view illustrating one embodiment of the components used to produce chillate for the heat exchanger of **FIG. 2.** °C = 5/9 (°F-32)
**FIG. 4A** is cross-sectional view, taken along line **4A-4A** of **FIG. 4,** of the phase change material heat exchanger, and further showing in dashed lines the electrical connection between the heat exchanger heating elements and a source of power.
**FIG. 5** is a diagrammatic plan view of a power transformer cooling system of the present invention suitable for use with a 100 MVA power transformer. °C = 5/9 (°F-32)
**FIG. 6** is a diagrammatic plan view of another power transformer cooling system of the present invention. °C = 5/9 (°F -32)
**FIG. 7** is a diagrammatic representation of a power substation having a number of transformers, each including a cooling system in accordance with one embodiment of the present invention.

Corresponding reference characters indicate corresponding parts throughout the several views. Although the drawings represent embodiments of the invention, the drawings are not necessarily to scale and certain features may be exaggerated or omitted in order to better illustrate and explain the present invention.

### DESCRIPTION OF THE PREFERRED EMBODIMENTS

For the purposes of promoting an understanding of the principles of the invention, reference will now be made to the embodiments illustrated in the drawings and specific language will be used to describe the same. It will nevertheless be understood that no limitation of the scope of the invention is thereby intended. The invention includes any alterations and further modifications in the illustrated devices and described methods and further applications of the principles of the invention which would normally occur to one skilled in the art to which the invention relates. For example, while the illustrated embodiment is a retrofit to an existing system, the inventive cooling system can be incorporated into the design specifications for a newly constructed power transformer array.

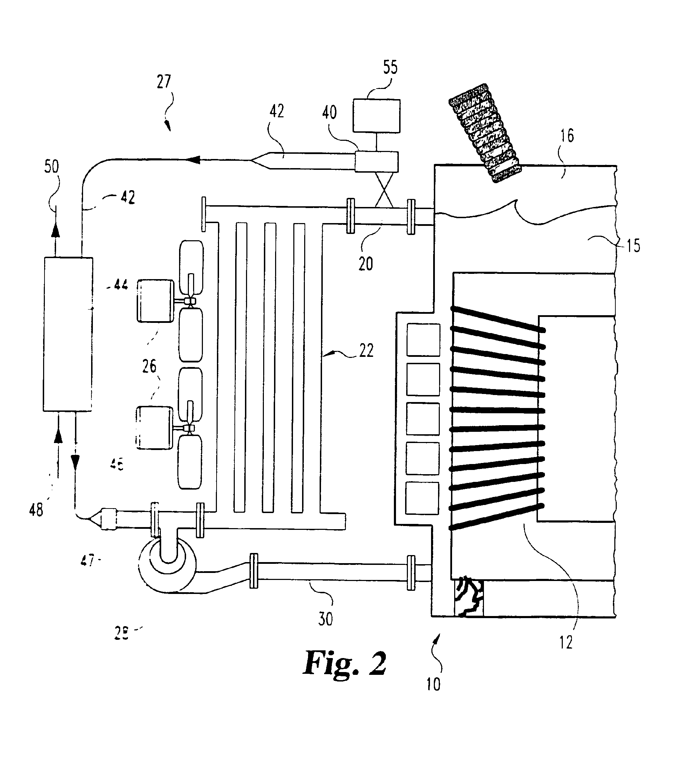

Referring now to **FIG. 2,** there is diagrammatically shown selected portions of one embodiment of a transformer cooling system **27** of the present invention. In this embodiment, the transformer and cooling system of the prior art shown in **FIG. 1** has been retrofit with a cooling system of the present invention to provide improved transformer cooling capabilities during many operating conditions possibly experienced by the transformer. Thus, the inventive cooling system is being used to augment the cooling capabilities of a conventional cooling system. This embodiment is illustrative and not intended to be limiting as the inventive cooling system alternatively may be used as the sole cooling system for the cooling oil of a transformer.

With reference numerals in **FIG. 2** the same as in **FIG. 1** for corresponding parts, the inventive cooling system introduces a three-way valve, diagrammatically shown at **40,** into conduit **20.** Valve **40** is plumbed to a conduit **42** that connects to a supplemental heat exchanger, abstractly shown at **44,** which is used to cool the cooling oil flowing around the transformer. Although shown for purposes of illustration in **FIG. 2** as being above or proximate conduit **20,** three-way valve **40** is positioned in conduit **20** in order to selectively redirect cooling oil such that the oil bypasses the radiator **22** and instead flows into conduit **42** and then through the chilled working fluid heat exchanger **44.** This bypassing is programmed (using controller **55** described herein) to occur when fans **26** and radiator **22** are not going to be capable of properly cooling the cooling oil.

In one feature of the invention, a return line **46** from heat exchanger **44** is connected to circulating pump **28.** Return line **46** introduces oil cooled during its passage through heat exchanger **44** to pump **28** for recirculation through transformer **10.** The temperature to which the oil is cooled depends on the transformer's loading, ambient temperature conditions, and the cooling system, which temperatures are preferably low enough not to degrade the life or efficiency of the transformer. Preferably, a check valve or a two-way valve **47** is interposed in return line **46** to control the recirculation flow provided to the transformer. In one embodiment, this valve **47** can be controlled in conjunction with valve **40.**

Heat exchanger **44** utilizes a chilled working fluid or chillate to sensibly reduce the temperature of the cooling oil from the transformer routed through the heat exchanger **44.** The chillate is introduced into heat exchanger **44** through conduit **48** connected to a conventional source of chillate (not shown). The chillate that has been heated when being used to reduce the temperature of the cooling oil is discharged from heat exchanger **44** through conduit **50,** which returns the chillate to the chillate source for reuse. Heat exchanger **44** can be any one of a variety of differently configured heat exchangers known in the art, such as a shell and tube heat exchanger. However, in the most preferred embodiment of the invention, the heat exchanger relies upon a fluid-to-fluid transfer of heat energy between flows of working fluids (i.e, cooling oil and chillate).

Three-way valve **40** is connected to a temperature sensing and control mechanism or controller, shown abstractly at **55,** that controls the operation of valve **40.** Controller **55** can also be programmed and operatively connected in a conventional fashion so as to control the remainder of the inventive cooling system, such as the two-way valve **47** or the flow of chillate from the chillate source, in a manner that will be understood by one of skill in the art in view of the explanation below. Preferably, the controller **55** can be a conventional programmable controller that generates control signals as a function of various input signals. In one specific embodiment, the controller **55** can be programmed to control valve **40** as a function of the temperature of the cooling oil. In this specific embodiment, controller **55** can include temperature sensors installed internally and/or externally to the transformer housing or tank, such as suspended in the cooling oil in the top third of the housing in particular.

In order to optimize transformer performance, controller **55** can be configured so that as the sensed temperature of the transformer insulating and cooling oil begins to rise, digital signals from the sensors can be provided to a solid state integrated thin film device which extrapolates the rise curve to determine if the maximum cooling oil temperature will exceed an acceptable level during a predetermined ensuing time period. Of course, this same determination can be made at a software level with an appropriately configured controller **55.** Typically, maximum temperatures within the transformer must be maintained below 95°C (203°F) or limited to a 65°C rise above ambient temperatures in order to maintain rated capability of the transformer and preserve useful life. If these parameters are anticipated to be exceeded, then controller **55** automatically opens valve **40,** as well as other necessary valves, in proper sequence to start the chilling process. For example, when the chillate source has produced chillate at a proper temperature, valves are opened in sequence to allow the chillate to flow through the "cooling" heat exchanger **44.** The controller **55** can substantially simultaneously open valve **40** to route the high temperature cooling oil for temperature reduction.

Due to this "look ahead" feature of the system control architecture, the internal components of transformer **10** are never allowed to approach temperatures which could reduce the useful life or efficiency of the transformer. Furthermore, the controller **55** can be programmed to operate the inventive cooling system within any range of ambient and cooling oil temperatures to maximize power transfer of the transformer. In an alternative approach, the controller **55** can include stored information indicative of a temperature history of a specific transformer. For instance, transformers typically exhibit a generally uniform temperature response to operating loads and ambient conditions. Each transformer responds differently and each has a different threshold temperature response before a deleterious condition arises. The controller **55** can maintain a temperature history or profile for every transformer connected to the cooling system. Actual temperature data from the cooling oil temperature sensors for each transformer can be compared against this profile to determine if a problematic temperature condition is anticipated.

It is within the scope of the present invention for chillate to be supplied to heat exchanger **44** in any fashion which is known to the skilled artisan. For example, transformer station electricity can be used to produce chillate by powering vapor compression refrigeration equipment, or an absorption chiller and/or natural sources of groundwater, lakes, etc. (e.g., operating a pump that brings groundwater to the heat exchanger). Such vapor compression refrigeration equipment may be operated on-line, in other words during the time period such chillate is actually needed, or off-line, or both on-line and off-line. When operated off-line, chillate produced by the vapor compression refrigeration equipment can be stored adequately as a fluid or ice which can later be used for removing core heat. Still further, the power transformer itself is a robust source of heat that can be used to power an absorption refrigeration or chiller as described more fully below. When the transformer heat is the source of energy for its own cooling, a cooling system even more energy efficient than achieved by the use of fans or vapor compression refrigeration may be realized.

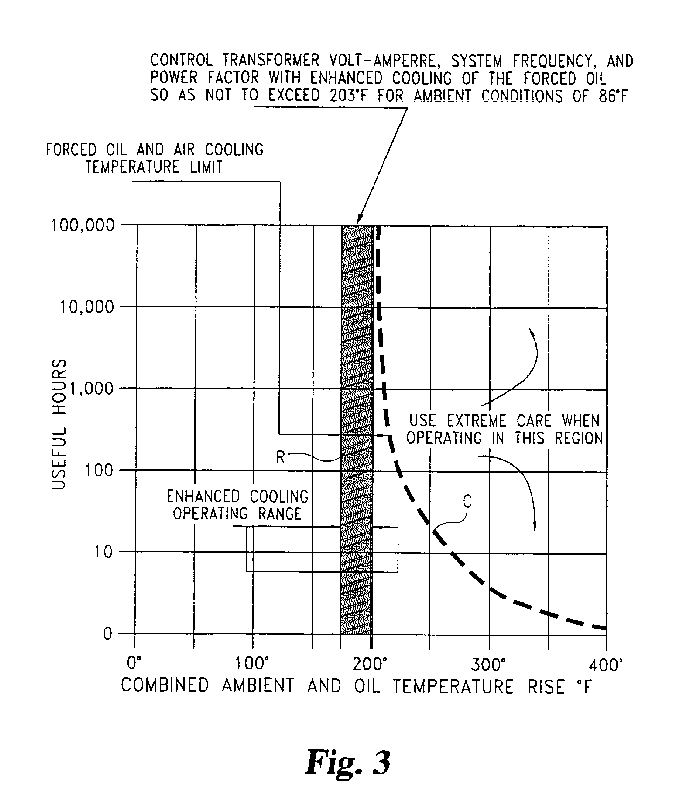

The graph in **FIG. 3** helps illustrate the benefits obtained by the cooling system depicted in **FIG. 2.** The graph relates transformer life, in useful hours, to the temperature rise in the transformer cooling oil. The curve **C** depicts the limits of performance for the traditional forced oil and air cooling systems of the prior art. These prior systems are typically unable to predictably maintain the transformer performance to the left of the curve **C,** which means that the transformer may operate in a dangerous range. However, with the present invention, the transformer performance is always maintained in the "safe" region, as represented by the operating range **R** in **FIG. 3.**

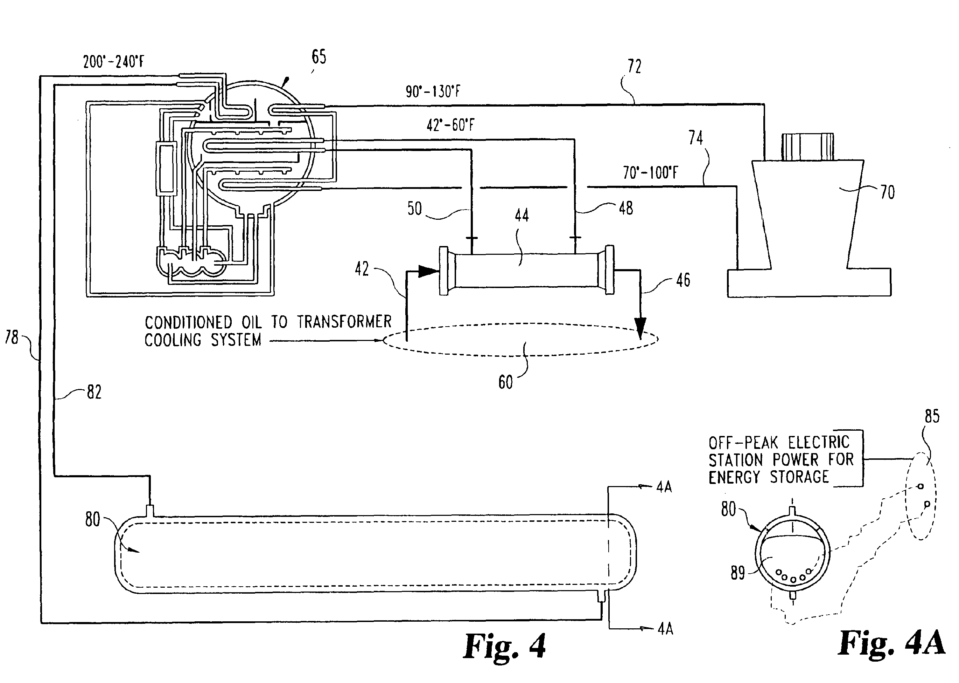

Referring now to **FIG. 4** and **FIG. 4A,** one configuration of equipment suitable for providing chillate to the supplemental heat exchanger **44** of **FIG. 2** is shown. In **FIG. 4,** the transformer **20** and the related components shown in **FIG. 2,** and other than heat exchanger **44,** are indicated abstractly at **60.** In this embodiment, an absorption chiller or refrigeration generator, generally designated **65,** is used as the source of chillate for heat exchanger **44.**

Conduit **48** is operably connected to absorption chiller **65** to deliver a cooled working fluid or chillate from the absorption chiller **65** to the shell and tube heat exchanger **44.** The chillate can be water preferably at a temperature between about 6°C and 16°C (42°F and 60°F). The chiller **65** is controlled by the controller **55** to provide a modulated temperature fluid. Conduit **50** is operably connected to absorption chiller **65** to return the warmed chillate for recooling. Absorption chiller **65** is connected, via pipes **72** and **74,** to a cooling tower **70** of traditional design which allows the excess absorbed heat from the absorption chilling process to be rejected to the atmosphere. Pipe **72** conveys high temperature water, such as at temperatures of between about 32°C and 54°C (90°F and 130°F), to cooling tower **70** for cooling. Pipe **74** returns lower temperature water, such as at temperatures of between about 21°C and 38°C (70°F and 100°F), to absorption chiller **65** for cooling uses.

The heat energy used to power absorption chiller **65** is supplied by, high temperature water, such as at temperatures of between about 93°C and 116°C (200°F and 240°F), delivered by pipe **78** from a phase change material (PCM) heat exchanger **80.** Steam may also be the source of heat energy. Pipe **82** returns lower temperature water from absorption chiller **65** to PCM heat exchanger **80** for reheating. IN a most preferred embodiment, PCM heat exchanger **80** can be of a type described in co-pending U.S. Patent Application No. 09/607,853, entitled "Phase Change Material Heat Exchanger With Heat Energy Transfer Elements Extending Through the Phase Material,".

As abstractly shown in **FIG. 4A,** the output of the transformer station **85** is electrically connected to the heat energy transfer elements **87** embedded in the phase change material **89.** Electricity from the transformer station **85** is dispatched to heat the elements **87** and melt the phase change material **89.** This process is preferably initiated by a controller, such as controller **55,** at a time of day when the dispatch load is less than the transformer rating, including possibly off-line times such as at night when the inventive cooling system is either less needed. PCM heat exchanger **80** is designed such that the heat energy given up as the phase change material solidifies from a molten state is transferred to the water passed through the annulus of the heat exchanger and routed to the absorption chiller **65,** such that chiller **65** can produced chillate used to condition the transformer oil passing through heat exchanger **44.**

Further description of the internal operations of the absorption chiller **65** is not provided herein, as the general operation is known in the art. For example, the configuration and workings of a chiller **65** are further described in U.S. Patent No. 4,936,109.

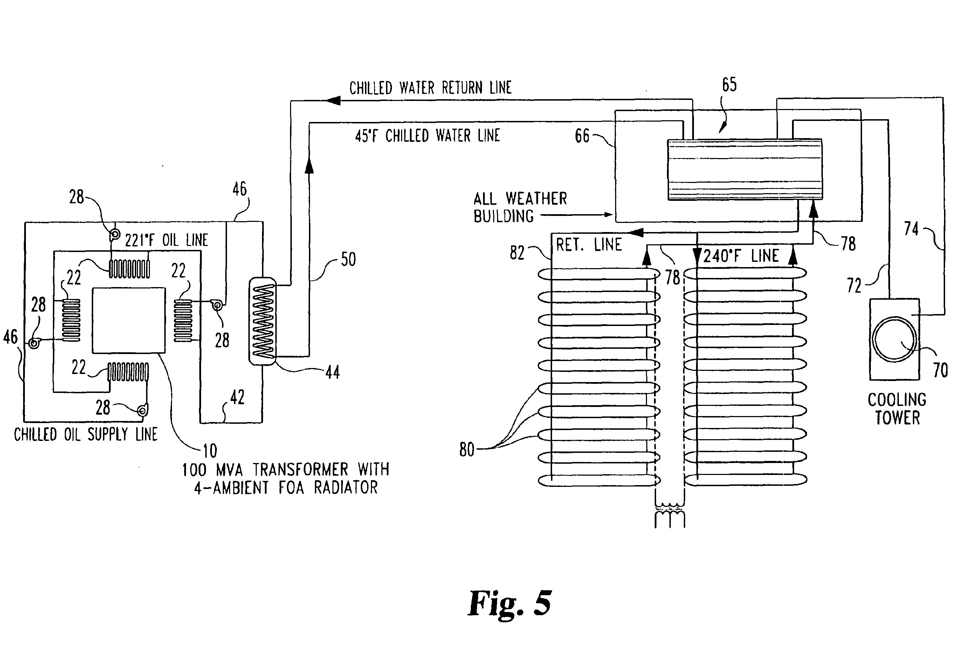

Referring now to the diagrammatic top view of **FIG. 5,** the cooling system of **FIG. 4** is more further shown retrofit or adapted to cool an existing power transformer **10** with a 100 MVA capacity rating, for example. The existing transformer **10** is shown already equipped with four forced oil air ambient cooling radiators **22** and their associated pumps **28** connected in a conventional fashion, and as described above with reference to **FIG. 2,** to the internal volume of the transformer. As described above with reference to **FIG. 2,** each inlet to the radiator **22** is provided with a bypass valve, such as valve **40,** connected to a common high temperature oil line **42** plumbed to a heat exchanger, such as heat exchanger **44.** The transformer oil cooled by passage through heat exchanger **44** is returned by the multi-branched pipe **46** for reintroduction into the transformer at the four inlets proximate the four radiators **22.** In one specific embodiment, the heat exchanger is provided with a heat transfer capacity of about 370.000 Kcal (seventy-five therms), and although shown as a single unit, may be comprised of multiple smaller units that together provide the required cooling capacity.

The temperature of the cooling oil outlet from the heat exchanger is a function of the ambient conditions and the transformer loading. When ambient temperatures are high, the heat exchanger works to outlet a cooling oil at a temperature that, in conjunction with the throughput of the cooling oil as controlled by the controller **55,** keeps the transformer from heating up beyond its recommended level. For example, for the embodiment of **FIG. 5** more fully described herein, under peak weather conditions in the summer in the Midwest (ambient air of about 38°C (100°F)) during which electricity usage is at its peak so that the transformer **10** is fully loaded, the cooling oil needs to keep the transformer from overheating. In a specific instance, and by way of example only, the temperature of the oil inlet to heat exchanger **44** can be about 105°C (221**°**F) with the temperature of the cooling oil outlet from the heat exchanger **44** at a lower set point, such as about 80°C (176°F). If an even a lower temperature of the outlet cooling oil is desired for such conditions, a larger chiller, as well as more heat exchangers than shown in **FIG. 5** for more energy storage, may be required. Of course, other types of heat sinks can be substituted for the described heat exchangers to accomplish the requisite energy storage capacity. Still further, in situations where ambient temperatures are lower, the output of the heat exchangers can be at a lower temperature and can be used to cool the transformer even further (i.e., below 105°C (221 °F)) to improve transformer efficiency.

In the specific embodiment depicted in **FIG. 5,** a 415 ton absorption chiller **65** housed in an all weather building abstractly shown at **66** provides heat exchanger **44** with a flow of a chillate, such as chilled water at about 7°C (45°F) through conduit **48.** Conduit **50** returns the warmed chillate from heat exchanger **44** to chiller **65.** Absorption chiller **65** is connected to a cooling tower **70** via pipes **72** and **74** in a conventional fashion.

Again by way of example the absorption chiller **65** can be powered by high temperature water at about 116°C (240°F) delivered by pipe **78** connected in parallel to a plurality of PCM heat exchangers **80** of the type described with reference to **FIG. 4.** The heat exchangers **80** can comprise twenty units, each constructed from a 12.8 m (forty-two foot) long, 0.61 m (twenty-four inch) diameter tube. Each heat exchanger can be filled with about 7 metric tons (eight tons) of phase change material or salt. Pipe **82** is connected in parallel to the heat exchangers **80** to return lower temperature water from absorption chiller **65** for reheating. Heat exchangers **80** can be sele tively supplied with off-peak station electric in order to store several million Kcal (BTUs) (such as 66.000.000 Kcal (15,000,000 BTUs) which can be enough for two hours of operations during maximum transformer loading and temperature) within electrically melted phase change material for eventual heating of water for use by chiller **65** or other cooling apparatus. As the stored energy in exchangers **80** is used up over time, the controller which regulates the operation of the cooling system causes additional electrical energy to be pulled from the station electric when the station is not involved with on-peak dispatch to replenish the energy storage of the phase change material. In other words, the electrical power to melt the phase change materials is obtained from the transformer substation during times of lower electrical requirements such as night time and hours during the day when the full electric capacity of the station is not required to serve demand. While these principles of the invention have been explained with reference to a PCM-type heat exchanger, other forms of heat exchanger can be adapted for use with this inventive system.

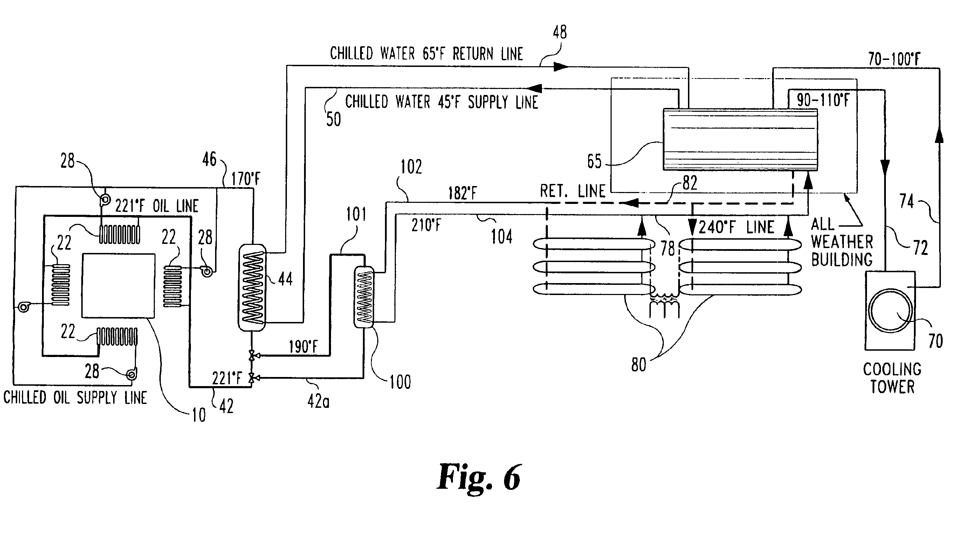

Referring now to **FIG. 6,** there is shown still another embodiment of the transformer cooling system of the present invention. The cooling system of **FIG. 6** is similar to the cooling system of **FIG. 5** except that it further includes a secondary heat exchanger **100** that is employed to allow the absorption chiller to be powered by the heat generated by the transformer. In some instances, during start up of the absorption chiller additional cooling capacity may be required. Moreover, additional heat energy may be needed by the chiller itself to facilitate its start up.

In this embodiment, high temperature cooling oil from the transformer is introduced into heat exchanger 100, which may be a shell and tube heat exchanger, via branch **42a** connected to conduit **42.** Preferably, a controllable valve is interposed between the conduit **42** and branch **42a,** which valve may be controlled by a separate programmable controller as a function of the cooling oil temperature, the status of the absorption chiller **65** or other conditions. Reduced temperature cooling oil is discharged from heat exchanger **100** into branch **101** connected to the inlet of the primary heat exchanger **44.** In a specific embodiment, the secondary heat exchanger can reduce the oil temperature from 105°C (221 °F) to about 88°C (190°F).

The working fluid, such as water, to be heated by heat exchanger **100** is delivered by pipe **102** that is connected to pipe **82,** which returns lower temperature water from absorption chiller **65** for reheating. The heated working fluid outlet from heat exchanger **100** enters pipe **104** that is **connected to pipe 78** that delivers high temperature water, such as between about 93°C and 116°C (200°F and 240°F) to absorption chiller **65** to power the production of chillate routed to heat exchanger **44.** Appropriate valving can be connected to the controller of the inventive cooling system through pipes **78** and **82** such that fluids may be selectively routed between absorption chiller **65** and either the PCM heat exchangers **80** or heat exchanger **100.** Such valves cause heat energy to be supplied to absorption chiller **65** from the larger heat energy source of PCM heat exchangers **80** during certain periods, such as during start up of the chiller in an effective manner or when the chillate required by heat exchanger **44** is greater than can be provided by absorption chiller **65** when only powered by the heat from heat exchanger **100.** More particularly, the PCM heat exchangers **80** can provide a surge of heat to enable efficient starting of the chiller when the transformer itself has not "banked" enough heat releasable by heat exchanger **100** to do so, or when "banking" sufficient heat in the transformer would be adverse to the life or efficiency of the transformer. In an alternate embodiment, instead of using PCM heat exchangers **80,** the start up of the chiller can be provided by other known devices such as a mechanical refrigeration device, for example an auxiliary boiler. Heat energy is supplied to chiller **65** by heat exchanger **100** when the absorption chiller has been started and is operating in a continuous mode, or at times that lesser chillate production is required.

The preferred embodiment of **FIG. 6** that uses PCM heat exchangers with the adjunct of a system employing the transformer heat (heat exchanger **100)** allows the system operator to optimize the economics of the transformer cooling invention by selecting those times when electric energy is most available and least costly to charge the PCM system so that it would be available to enhance transformer operation when the equipment and system are in a high stress maximum cost of operation mode. A concurrent benefit of the system as it is configured also allows system operators to elect to "bank" heat stored in the PCM heat exchangers during times when energy costs are the lowest, off-peak times, and bring them back by operating the transformer cooling system to reduce transformer winding and core losses which improves the units throughput efficiency and reduces operating costs, even when the unit is able to operate below critical temperatures because of lower ambient temperatures.

In one speicfic embodiment useful for a 300 MVA transformer, the chiller can be a 321 metric ton (354 ton) device, such as the Trane Model ABSC-03F. The heat exchanger can be a 14-16 metric ton (16-18 ton) PCM unit. The illustrated system can store 15.000.000 Kcal (3,300,000 BTUs) off-peak to augment the heat source for the absorption chiller.

In a modification to the embodiment of **FIG. 6,** the outlet line **101** can be connected directly to conduit **46,** thereby effectively bypassing the primary heat exchanger **44.** With this configuration, the secondary heat exchanger 100 can provide the primary cooling for the transformer oil, thereby reducing the output requirements for the absorption chiller.

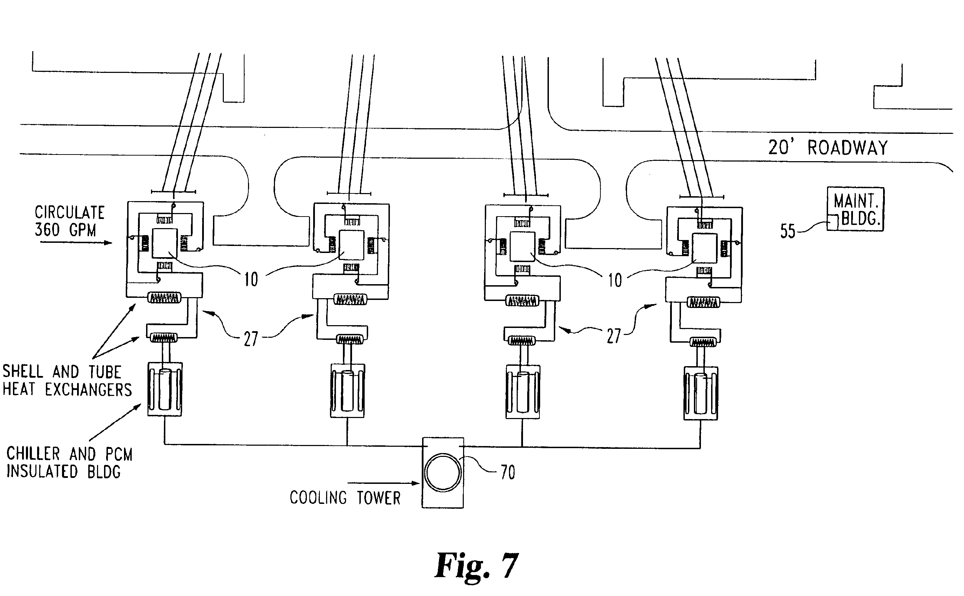

The cooling system of the present invention, such as system **27** described above, can form an integral part of a power generation substation. Thus, as depicted in **FIG. 7,** a number of transformers **10** can be provided with a corresponding cooling system **27.** Each cooling system can include a chiller, such as chiller **65,** connected to a common cooling tower **70.** The programmable controller **55** can be housed in a maintenance or control building. A single controller can be provided for each cooling system, or a common controller can receive temperature and performance data from and issue control signals to every cooling system. Preferably, the components of each cooling system **27** are calibrated to circulate cooling oil at about 1200 l/min (360 gpm), and to accomplish on-line chilling up to 107 metric long ton/hr (118 tons/hr).

## Claims

1. A system for reducing the temperature of a coolant (15) flowing through a power transformer (10), comprising:
a power transformer cooling system (27) having a first heat exchanger (22) having a first inlet conduit (20) for receiving the coolant from the power transformer (10) and an outlet (30) for returning the coolant to the power transformer (10);
a controllable valve (40) connected between the first inlet conduit (20) and a second inlet conduit (42), the second inlet conduit (42) communicating with a second, liquid-to-liquid heat exchanger (44), a source (48) of chillate connected to the second heat exchanger (44) to provide chillate thereto for withdrawing heat from the coolant flowing through the second heat exchanger (44), a second outlet (46) of the second heat exchanger communicating with the power transformer (10); and
the controllable valve (40) selectively operable between an open position wherein the coolant is diverted to the second inlet conduit (42) and a closed position wherein the coolant is permitted to flow through the first inlet conduit (20) to the first heat exchanger (22), a controller (55) actuating the valve (40) as a function of the temperature of either the transformer cooling system (27) or the transformer (10).

2. The system of Claim 1, wherein the controllable valve (40) includes a programmable controller (55) having a memory for storing a temperature profile of either the transformer cooling system (27) or the transformer (10) and means for comparing the temperature of either the transformer cooling system (27) or the transformer (10) to the temperature profile.

3. The system of Claim 1, wherein the first heat exchanger (22) is a forced-air heat exchanger.

4. The system of Claim 1, wherein the source of chillate includes an absorption chiller (65).

5. The system of Claim 4, wherein the absorption chiller (65) is connected to a liquid heat storage component (80).

6. The system of Claim 5, wherein the heat storage component (80) includes a phase change material (89).

7. The system of Claim 5, wherein the heat storage component (80) is powered by energy generated by the transformer (10).

8. The system of Claim 7, wherein the heat storage component (80) is powered by heat energy generated by the transformer (10).

9. The system of Claim 1, wherein the chillate is water.

10. A method for reducing the temperature of a coolant flowing through a power transformer cooling system (27), comprising the steps of:
inserting a controllable valve (40) between a first inlet conduit (20) of a first heat exchanger (22) and a second inlet conduit (42) which communicates with a second, liquid-to-liquid heat exchanger (44);
supplying a source (48) of chillate to the second heat exchanger (44) to withdraw heat energy from coolant flowing through the second heat exchanger (44); and
using a controller (55) to actuate the valve (40) between a closed position wherein the coolant is permitted to flow through the first inlet conduit (20) and an open position wherein the coolant is diverted to the second inlet conduit (42), the controller (55) actuating the valve (40) as a function of the temperature of either the transformer cooling system (27) or the transformer (10).

11. The method of Claim 10, further comprising the step of cooling the chillate using an absorption chiller (65) driven by a heat energy storage component (80).

12. The method of Claim 11, further comprising the step of driving the heat energy storage component (80) by energy extracted from the transformer (10).

13. The method of Claim 12, wherein the energy extracted from the transformer (10) is heat energy.

14. The method of Claim 13, wherein the heat energy extracted from the transformer (10) is waste heat.

15. The method of Claim 10, wherein the heat energy storage component (80) includes a phase change material (89), and the energy extracted from the transformer (10) is electrical energy.

16. The method of Claim 15, wherein the transformer (10) is part of a power distribution grid and the energy extracted from the transformer (10) is off-peak electrical energy.

## Patentansprüche

1. System zum Verringern der Temperatur eines Kühlmittels (15), das durch einen Leistungstransformator (10) strömt, wobei das System Folgendes umfaßt:
ein Leistungstransformator-Kühlsystem (27), das einen ersten Wärmeaustauscher (22) hat, der eine erste Einlaßleitung (20) zum Aufnehmen des Kühlmittels von dem Leistungstransformator (10) und einen Auslaß (30) zum Zurückführen des Kühlmittels zu dem Leistungstransformator (10) hat,
ein regelbares Ventil (40), das zwischen die erste Einlaßleitung (20) und eine zweite Einlaßleitung (42) geschaltet ist, wobei die zweite Einlaßleitung (42) mit einem zweiten, einem Flüssigkeit-Flüssigkeit-Wärmeaustauscher (44) in Verbindung steht, wobei eine Kühlmedium-Quelle (48) mit dem zweiten Wärmeaustauscher (44) verbunden ist, um demselben ein Kühlmedium bereitzustellen, um Wärme aus dem durch den zweiten Wärmeaustauscher (44) strömenden Kühlmittel abzuziehen, wobei ein zweiter Auslaß (46) des zweiten Wärmeaustauschers mit dem Leistungstransformator (10) in Verbindung stcht, und
wobei das regelbare Ventil (40) selektiv betätigt werden kann zwischen einer offenen Position, in der das Kühlmittel zu der zweiten Einlaßleitung (42) umgeleitet wird, und einer geschlossenen Position, in der ermöglicht wird, daß das Kühlmittel durch die erste Einlaßleitung (20) zu dem ersten Wärmeaustauscher (22) strömt, wobei ein Regler (55) das Ventil (40) in Abhängigkeit von der Temperatur entweder des Transformator-Kühlsystems (27) oder des Transformators (10) betätigt.

2. System nach Anspruch 1, wobei das regelbare Ventil (40) einen programmierbaren Regler (55) einschließt, der einen Speicher zum Speichern eines Temperaturprofils entweder des Transformator-Kühlsystems (27) oder des Transformators (10) und Mittel zum Vergleichen der Temperatur entweder des Transformator-Kühlsystems (27) oder des Transformators (10) mit dem Temperaturprofil hat.

3. System nach Anspruch 1, wobei der erste Wärmeaustauscher (22) ein Umluft-Wärmeaustauscher ist.

4. System nach Anspruch 1, wobei die Kühlmedium-Quelle einen Absorptionskühler (65) einschließt.

5. System nach Anspruch 4, wobei der Absorptionskühler (65) mit einer Flüssigkeitswärmespeicher-Komponente (80) verbunden ist.

6. System nach Anspruch 5, wobei die Wärmespeicher-Komponente (80) ein Material (89) für Phasenumwandlung einschließt.

7. System nach Anspruch 5, wobei die Wärmespeicher-Komponente (80) durch von dem Transformator (10) erzeugte Energie angetrieben wird.

8. System nach Anspruch 6, wobei die Wännespeicher-Komponente (80) durch von dem Transformator (10) erzeugte Energie angetrieben wird.

9. System nach Anspruch 1, wobei das Kühlmedium Wasser ist.

10. Verfahren zum Verringern der Temperatur eines Kühlmittels, das durch ein Leistungstransfomator-Kühlsystem (27) strömt, wobei das Verfahren folgende Schritte umfaßt:
Einfügen eines regelbaren Ventils (40) zwischen eine erste Einlaßleitung (20) eines ersten Wärmeaustauschers (22) und eine zweite Einlaßleitung (42), die mit einem zweiten, einem Flüssigkeit-Flüssigkeit-Wärmeaustauscher (44) in Verbindung steht,
Bereitstellen einer Kühlmedium-Quelle (48) für den zweiten Wärmeaustauscher (44), um Wärmeenergie aus dem durch den zweiten Wärmeaustauscher (44) strömenden Kühlmittel abzuziehen, und
Verwenden eines Reglers (55), um das Ventil (40) zu betätigen zwischen einer geschlossenen Position, in der ermöglicht wird, daß das Kühlmittel durch die erste Einlaßleitung (20) strömt, und einer offenen Position, in der das Kühlmittel zu der zweiten Einlaßleitung (42) umgeleitet wird, wobei der Regler (55) das Ventil (40) in Abhängigkeit von der Temperatur entweder des Transformator-Kühlsystems (27) oder des Transformators (10) betätigt.

11. Verfahren nach Anspruch 10, das ferner den Schritt umfaßt, das Kühlmedium unter Verwendung eines Absorptionskühlers (65) zu kühlen, der durch eine Wärmeenergiespeicher-Komponente (80) angetrieben wird.

12. Verfahren nach Anspruch 11, das ferner den Schritt umfaßt, die Wärmeenergiespeicher-Komponente (80) durch von dem Transformator (10) abgezogene Energie anzutreiben.

13. Verfahren nach Anspruch 12, wobei die von dem Transformator (10) abgezogene Energie Wärmeenergie ist.

14. Verfahren nach Anspruch 13, wobei die von dem Transformator (10) abgezogene Energie Abwärme ist.

15. Verfahren nach Anspruch 10, wobei die Wärmeenergiespeicher-Komponente (80) ein Material (89) für Phasenumwandlung einschließt und die von dem Transformator (10) abgezogene Energie Elektroenergie ist.

16. Verfahren nach Anspruch 15, wobei der Transformator (10) Teil eines Energieverteilungsnetzes ist und die von dem Transformator (10) abgezogene Energie Elektroenergie außerhalb der Spitzenbelastung ist.

## Revendications

1. Système destiné à réduire la température d'un moyen de refroidissement (15) s'écoulant à travers un transformateur de puissance, comprenant :
un système de refroidissement de transformateur de puissance (27) comportant un premier échangeur de chaleur (22) comportant un premier conduit d'entrée (20), destiné à recevoir le moyen de refroidissement du transformateur de puissance (10), et une sortie (30) destinée à ramener le moyen de refroidissement vers le transformateur de puissance (10) ;
une soupape à commande (40) connectée entre le premier conduit d'entrée (20) et un deuxième conduit d'entrée (42), le deuxième conduit d'entrée (42) communiquant avec un deuxième échangeur de chaleur liquide-liquide (44), une source (48) de moyen réfrigérant connectée au deuxième échangeur de chaleur (44) pour y foumir du réfrigérant afin d'éliminer la chaleur du moyen de refroidissement s'écoulant à travers le deuxième échangeur de chaleur (44), une deuxième sortie (46) du deuxième échangeur de chaleur communiquant avec le transformateur de puissance (10) ; et
la soupape à commande (40) fonctionnant sélectivement entre une position ouverte, dans laquelle le moyen de refroidissement est dévié vers le deuxième conduit d'entrée (42), et une position fermée, dans laquelle le moyen de refroidissement peut s'écouler à travers le premier conduit d'entrée (20) vers le premier échangeur de chaleur (22), un dispositif de commande (55) entraînant l'actionnement de la soupape (40) en fonction de la température du système de refroidissement de transformateur (27) ou du transformateur (10).

2. Système selon la revendication 1, dans lequel la soupape à commande (40) englobe un dispositif de commande programmable (55) comportant une mémoire pour enregistrer un profil des températures du système de refroidissement de transformateur (27) ou du transformateur (10), et un moyen pour comparer la température du système de refroidissement de transformateur (27) ou du transformateur (10) avec le profil des températures.

3. Système selon la revendication 1, dans lequel le premier échangeur de chaleur (22) est un échangeur de chaleur à air pulsé.

4. Système selon la revendication 1, dans lequel la source de moyen réfrigérant englobe un dispositif de refroidissement à absorption (65).

5. Système selon la revendication 4, dans lequel le dispositif de refroidissement à absorption (65) est connecté à un composant de stockage de chaleur de liquide (80).

6. Système selon la revendication 5, dans lequel le composant de stockage de chaleur (80) englobe un matériau pour changement de phase (89).

7. Système selon la revendication 5, dans lequel le composant de stockage de chaleur (80) est actionné par l'énergie produite par le transformateur (10),

8. Système selon la revendication 7, dans lequel le composant de stockage de chaleur (80) et actionné par l'énergie thermique produite par le transformateur (10).

9. Système selon la revendication 1, dans lequel le moyen réfrigérant est constitué par de l'eau.

10. Procédé de réduction de la température d'un moyen de refroidissement s'écoulant à travers un système de refroidissement de transformateur de puissance (27), comprenant les étapes ci-dessous :
insertion d'une soupape à commande (40) entre un premier conduit d'entrée (20) d'un premier échangeur de chaleur (22) et un deuxième conduit d'entrée (42) communiquant avec un deuxième échangeur de chaleur liquide-liquide (44) ;
alimentation du deuxième échangeur de chaleur (44) d'une source (48) de moyen réfrigérant afin d'éliminer l'énergie thermique du moyen de refroidissement s'écoulant à travers le deuxième échangeur de chaleur (44) ; et
utilisation d'un dispositif de commande (55) pour déplacer la soupape (40) entre une position fermée, dans laquelle le moyen de refroidissement peut s'écouler à travers le premier conduit d'entrée (20), et une position ouverte, dans laquelle le moyen de refroidissement est dévié vers le deuxième conduit d'entrée (42), le dispositif de commande (55) entraînant l'actionnement de la soupape (40) en fonction de la température du système de refroidissement de transformateur (27) ou du transformateur (10).

11. Procédé selon la revendication 10, comprenant en outre l'étape de refroidissement du moyen réfrigérant par l'intermédiaire d'un dispositif de refroidissement à absorption (65) entraîné par un composant de stockage d'énergie thermique (80).

12. Procédé selon la revendication 11, comprenant en outre l'étape d'entraînement du composant de stockage d'énergie thermique (80) par l'énergie extraite du transformateur (10).

13. Procédé selon la revendication 12, dans lequel l'énergie extraite du transformateur (10) est constituée par de l'énergie thermique.

14. Procédé selon la revendication 13, dans lequel l'énergie thermique extraite du transformateur (10) est constituée par de la chaleur résiduelle.

15. Procédé selon la revendication 10, dans lequel le composant de stockage d'énergie thermique (80) englobe un matériau pour changement de phase (89), l'énergie extraite du transformateur (10) étant de l'énergie électrique.

16. Procédé selon la revendication 15, dans lequel le transformateur (10) fait partie d'une grille de distribution d'énergie, l'énergie extraite du transformateur (10) étant de l'énergie électrique des heures creuses.
